# EUROPÄISCHE PATENTSCHRIFT

(11) **EP 3 930 980 B1**
(45) Veröffentlichungstag und Bekanntmachung des Hinweises auf die Patenterteilung: **01.01.2025**
(21) Anmeldenummer: 20706475.9
(22) Anmeldetag: 20.02.2020
(51) Int. Cl.: B29C 45/17, B29C 33/30, B29C 45/14

(54) **VORRICHTUNG ZUR ANSPRITZUNG VON KUNSTSTOFFELEMENTEN AN OBERFLÄCHEN EINES HALBZEUGS**
APPARATURS FOR INJECTION OF PLASTIC ELEMENTS ONTO A SURFACE OF A SEMI-FINISHED PRODUCT
APPARAIE POUR MOULAGE PAR INJECTION UN ELEMENT EN MATIÈRE PLASTIQUE SUR UN SURFACE D'UN PRODUIT SEMI-FINI

(30) Priorität: 25.02.2019 DE 102019202513
(43) Veröffentlichungstag der Anmeldung: 05.01.2022
(73) Patentinhaber: ANYBRID GmbH, 01307 Dresden (DE)
(72) Erfinder: JÄGER, Hubert, 01307 Dresden (DE); KRAHL, Michael, 01307 Dresden (DE); WEBER, Tony, 01219 Dresden (DE); LUFT, Jan, 01097 Dresden (DE)
(74) Vertreter: Eisenführ Speiser
(86) Internationale Anmeldenummer: PCT/EP2020/054483
(87) Internationale Veröffentlichungsnummer: WO 2020/173803

(56) Entgegenhaltungen:
- WO-A1-2013/040510
- WO-A1-2015/172829
- JP-A- H05 208 433
- US-A1- 2004 018 269

## Beschreibung

Die Erfindung betrifft eine Vorrichtung zur Ausbildung oder dem Anspritzen von Elementen, insbesondere Kunststoffelementen an Oberflächen eines Halbzeugs. Sie kann insbesondere vorteilhaft bei großformatigen Halbzeugen, wie z.B. großen Blechen, Profilen oder Karosserieteilen eingesetzt werden, um Kunststoffelemente direkt an einer gewünschten Position mit der jeweils gewünschten Geometrie und Dimensionierung auszubilden. So kann man beispielsweise Kunststoffbuchsen direkt in Bohrungen eines Halbzeugs herstellen. Man kann aber auch Elemente anspritzen. Dies gelingt vorteilhaft, wenn Konturelemente an Oberflächen eines Halbzeugs vorhanden sind, in die bei einem Spritzgießvorgang Elementwerkstoff eingespritzt oder über die Oberfläche eines Halbzeugs herausragende Konturelemente umspritzt werden können.

Insbesondere bei großformatigen Bauteilen, die mit Elementen versehen werden sollen, ist bisher der Aufwand für die Herstellung und den Betrieb entsprechend dafür geeigneter Spritzgießanlagen oder -werkzeuge erheblich, da ja ein Halbzeug zumindest zu einem gro-ßen Teil in ein entsprechendes Formwerkzeug hineinpassen muss. Dabei spielen die Werkzeugkosten bei kleineren Stückzahlen eine besonders große Rolle.

Die Kosten für Spritzgusswerkzeuge steigen zusätzlich, wenn an Halbzeugen an mehreren in Abständen zueinander angeordneten Positionen Elemente ausgebildet werden sollen, da hierfür in der Regel teure kostenintensive Heißkanalsysteme eingesetzt werden.

In der Regel sind Spritzgießanlagen mit denen Hybridstrukturen aus Metall- oder Verbundwerkstoffen ausgebildet werden sollen, überdimensioniert.

Nachteilig ist außerdem, dass beim Anfahren einer Spritzgießmaschine und großflächiger Formwerkzeuge große Werkstoffverluste in Kauf genommen werden müssen.

Mit Spritzgießverfahren können die verschiedensten Werkstoffe verarbeitet werden, neben Kunststoffen, wie z.B. auch Silikone, Schäume können auch Metall- und Keramikkompositwerkstoffe so verarbeitet werden, wenn eine entsprechende Metall- oder Keramikpartikel enthaltende Kunststoffmatrix, die dann eine Binderfunktion übernehmen kann, durch Spritzgießen verarbeitet wird. Kompositwerkstoffe können ggf. nachfolgend auch von organischen Komponenten thermisch befreit und anschließend gesintert werden.

Innerhalb des beschriebenen Verfahrens können auch Zusatzelemente (Metallinserts, Pins, elektrische - und elektronische Elemente etc.) urformend umhüllt und mit einem Halbzeug verbunden werden.

So ist es bedeutsam, dass beim Kunststoffspritzgießen eine ausreichende Abdichtung eines Formwerkzeugs erreicht wird, so dass kein Kunststoff entweichen kann und gesichert werden kann, dass ein angespritztes Zusatzelement an der jeweils gewünschten Position und in der vorgegebenen Form ausgebildet werden kann. Dazu sind üblicherweise hohe Kräfte und Drücke erforderlich.

Bei bekannten Lösungen wird häufig die Schließkraft mittels eines C-förmigen Rahmens übertragen, welcher nach einer Seite offen ist. Dadurch ist die Größe des in ein Formwerkzeug einzulegenden Halbzeuges nicht durch die Spritzgießeinrichtung begrenzt. Nachteilig ist jedoch, dass für große Halbzeuge auch große und damit kostenintensive Systeme zum Bewegen und Positionieren der Halbzeuge eingesetzt werden müssen.

WO 2015/172829 A1 und WO 2013/040510 A1 zeigen Spritzgießmaschinen mit stationären Gestellen ohne lokal definiert bewegliche und positionierbare C-förmige Bügelelemente.

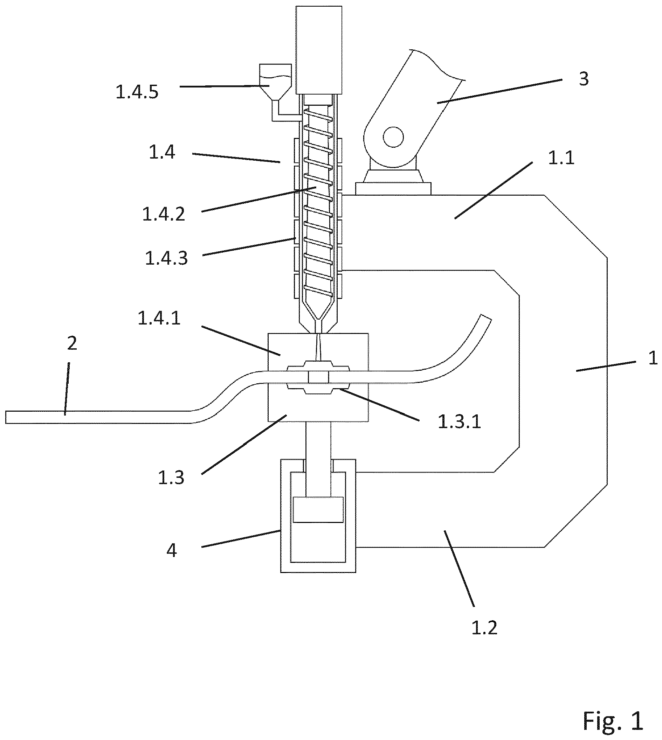

DE 10 2006 048 400 A1 (DE`400) offenbart eine Spritzgießmaschine für thermoplastischen Kunststoff mit Einrichtungen zum Plastifizieren des Kunststoffes und zum Einspritzen des plastifizierten Kunststoffes durch eine Einspritzdüse in eine Form, wobei die Einspritzdüse relativ zur Form in mehreren Richtungen verstellbar ist. Die DE'400 geht von einem Verzicht auf die Verwendung der Plastifizierschnecke als Einspritzkolben aus und sieht eine getrennt manipulierbare Einrichtung zum Einspritzen des Kunststoffes vor. Die in Fig. 1 der DE`400 gezeigte Anlage weist eine ortsfeste Einrichtung zum Plastifzieren von Kunststoffgranulat auf.

DE 10 2006 041 415 A1 offenbart ein Verfahren zum Anspritzen von Kunststoffteilen an ein Werkstück, wobei das Werkstück zwischen zwei Formhälften eingeführt wird, welche von den Formaufspannplatten einer einen Schließdruck auf die Form ausübenden Schließeinheit mit C-Rahmen getragen werden.

Es ist Aufgabe der Erfindung, Möglichkeiten für eine flexible Herstellung von Elementen, die durch Spritzgießen an Halbzeugen ausgebildet werden, und mit denen die Nachteile des Standes der Technik vermieden werden können, anzugeben.

Erfindungsgemäß wird diese Aufgabe mit einer Vorrichtung, die die Merkmale des Anspruchs 1 aufweist, gelöst. Vorteilhafte Ausgestaltungen und Weiterbildungen der Erfindung können mit in untergeordneten Ansprüchen bezeichneten Merkmalen realisiert werden.

Bei der erfindungsgemäßen Vorrichtung zur Ausbildung oder dem Anspritzen von Elementen, insbesondere Kunststoffelementen an Oberflächen eines Halbzeugs ist ein C-förmiges Bügelelement vorteilhaft so ausgebildet, dass es mit einem Manipulator entlang mindestens einer Achse in Bezug zu einem Halbzeug bewegt und lokal definiert positionierbar ist.

An einem der beiden sich gegenüberliegend angeordneten ersten Schenkel des C-förmigen Bügelelements ist eine zum Spritzgießen ausgebildete Anordnung und am zweiten Schenkel des C-förmigen Bügelelements, der zum Spritzgießen ausgebildeten Anordnung gegenüberliegend, ist ein Gegenhalter angeordnet.

Alternativ dazu kann die zum Spritzgießen ausgebildete Anordnung auch an einem Schenkel eines Positionierbügels und ein Gegenhalter kann dabei an einem gegenüberliegenden Schenkel des Positionierbügels angeordnet sein, wobei die Positionierung der zum Spritzgießen ausgebildeten Anordnung und des gegenüberliegend angeordneten Gegenhalters bzw. eines zweiten Formwerkzeugs zueinander mit Hilfe des Positionierbügels erfolgen kann. In diesem Fall ist ein C-förmiges Bügelelement mit einem Haltebügel und einem Positionierbügel gebildet. Dabei sollte der außenliegend oder parallel zum Positionierbügel angeordnete Haltebügel gelenkig mit einem Manipulator oder mit der zum Spritzgießen ausgebildeten Anordnung und gelenkig mit dem Gegenhalter verbunden sein. Der Positionierbügel sollte dabei starr mit dem Gegenhalter und der Anordnung, die zum Spritzgießen ausgebildet ist, verbunden sein.

An mindestens einem der Schenkel des Positionierbügels kann vorteilhaft eine Linearführung, die zur Positionierung der Formwerkzeuge in Bezug zueinander oder eines Formwerkzeugs oder in Bezug zur Position des Gegenhalters ausgebildet ist, vorhanden sein. Mit der Linearführung kann eine Biegung des C-förmigen Bügelelements kompensiert werden, die ohne Linearführung dazu führen würde, dass Positionierfehler an einem am Halbzeug ausgebildeten Kunststoffelement auftreten würden.

Die Linearführung sollte eine Bewegung des jeweiligen Schenkels, an dem die Linearführung am Positionierbügel angeordnet ist, senkrecht zu seiner Längsachse ermöglichen.

Positionier- und Haltebügel sind dabei nicht miteinander verbunden, sondern bilden parallele Lastpfade. Der Haltebügel kann die zum Spritzgießen erforderlichen Druckkräfte übertragen, während der Positionierbügel Kräfte, die infolge der Eigenmasse der Vorrichtung auftreten, ausgleichen kann.

Bei der erfindungsgemäßen Vorrichtung kann aber auch jede prinzipiell zur Ausbildung oder dem Anspritzen von Elementen geeignete Anordnung eingesetzt werden, wobei das Spritzgießen aber bevorzugt ist.

Außerdem ist die Vorrichtung so ausgebildet, dass ein Halbzeug zwischen Gegenhalter und Anordnung angeordnet werden kann, wenn ein Element ausgebildet werden soll.

In Richtung auf eine Oberfläche des Halbzeugs, an der ein Element ausgebildet werden soll, ist ein in Richtung der jeweiligen Oberfläche des Halbzeugs offenes Formwerkzeug mit einer Negativkontur des jeweiligen Elements angeordnet.

Die Anordnung und/oder der Gegenhalter ist/sind so gegen die jeweilige Oberfläche des Halbzeugs bewegbar, dass die offene Seite des Formwerkzeugs druckkraftbeaufschlagt die jeweilige Oberfläche des Halbzeugs und der Gegenhalter die gegenüberliegende Oberfläche des Halbzeugs druckkraftbeaufschlagt berührt, wenn ein Element mittels Spritzgie-ßen hergestellt wird, wobei Formwerkzeug und Gegenhalter dann gegenüberliegend angeordnet sind.

Zusätzlich kann am Gegenhalter ein in Richtung der Oberfläche des Halbzeugs offenes zweites Formwerkzeug vorhanden sein. Es kann dort angeordnet oder Bestandteil des Gegenhalters sein. Ein zweites Formwerkzeug kann insbesondere dann eingesetzt werden, wenn Elemente an/in Durchbrechungen (z.B. Bohrungen), die im Halbzeug ausgebildet sind, hergestellt werden sollen.

Vorteilhaft können unterschiedlich ausgebildete erste und/oder zweite Formwerkzeuge austauschbar an der Anordnung oder dem Gegenhalter befestigt sein, so dass unterschiedliche geometrisch gestaltete und/oder dimensionierte Elemente hergestellt werden können.

Die Anordnung und/oder der Gegenhalter kann/können mittels eines Antriebs translatorisch in Richtung der jeweiligen Oberfläche des Halbzeugs und in die dazu entgegengesetzte Richtung bewegbar sein. Wird/werden die Anordnung und/oder der Gegenhalter in Richtung auf eine Oberfläche des Halbzeugs bewegt, wird das Halbzeug zwischen erstem Formwerkzeug und Gegenhalter eingeklemmt. Dabei legt sich zumindest das erste Formwerkzeug an die Oberfläche des Halbzeugs an, so dass das erste Formwerkzeug für plastifizierten Elementwerkstoff dicht anliegt und ein Element mit der Anordnung durch Spritzgießen an dieser Oberfläche hergestellt werden kann. Ist ein zweites Formwerkzeug vorhanden, liegt dieses in analoger Form ebenfalls abgedichtet an der gegenüberliegenden Oberfläche des Halbzeugs an, so dass auch dort ein Teil eines Elements ausgebildet werden kann, wenn plastifizierter Elementwerkstoff durch eine Durchbrechung im Halbzeug in das zweite Formwerkzeug gelangen kann. Bevorzugt sollte der Gegenhalter mittels eines Antriebs translatorisch bewegt werden.

Als Antrieb für die translatorische Bewegung kann man einen elektrischen Antrieb, der ggf. mit einem Getriebe verbunden ist, um die erforderlichen Druckkräfte zu erreichen, einsetzen. Es sind aber auch hydraulische oder pneumatische Antriebe an der Vorrichtung einsetzbar.

Das C-Förmige Bügelelement, der Haltebügel und /oder der Positionierbügel sollte(n) zumindest teilweise mit glas- oder kohlenstofffaserverstärktem Kunststoff gebildet sein, um dem Leichtbauaspekt Rechnung zu tragen und trotzdem eine ausreichende Festigkeit aufzuweisen. Es kann auch als Hybridstruktur, bei dem auch metallische Elemente zur Verstärkung, Stabilisierung und/oder für eine Befestigung vorhanden sein können, ausgebildet sein.

Erfindungsgemäß ist die Anordnung mit einer Plastifiziereinheit ausgebildet. Vorzugsweise ist die Plastifziereinheit mit einer in einem Plastifizierzylinder drehbar gelagerten Schnecke, die zur dosierten Förderung von plastifiziertem Werkstoff in das/die Formwerkzeug(e) ausgebildet. An einer Plastifiziereinheit sollte eine Heizung vorhanden sein. Zusätzlich oder an Stelle einer Schnecke kann eine eine Druckkraft auf plastifizierten Werkstoff ausübbare Einrichtung eingesetzt werden.

Erfindungsgemäß ist die Anordnung mit einer Elementwerkstoffzuführung für in Granulatform vorliegenden Elementwerkstoff ausgebildet, die an der Plastifiziereinheit angeschlossen ist

Das C-förmige Bügelelement kann manuell von einem Werker mittels einer Zugeinrichtung oder Handhabungskinematik unterstützt, mittels eines Linearantriebs in ein oder mehreren Bewegungsachsen, oder mittels eines Industrieroboters als Manipulator bewegt werden. Die Art der Bewegung mit einem entsprechenden Manipulator kann je nach zu bearbeitendem Halbzeug gewählt werden. So genügt beispielsweise ein einfacher Linearantrieb, mit dem die Vorrichtung bewegt werden kann, wenn Elemente entlang eines Halbzeugrandes zumindest in einem annähernd konstanten Abstand vom Rand entlang des Randes ausgebildet werden sollen.

Eine Bewegung der Vorrichtung ist ebenfalls möglich, wenn die Vorrichtung an einem ausreichend festen Seil hängend von einem Werker bewegt werden kann. Dazu kann am jeweiligen Seil eine die Masse der Vorrichtung zumindest teilweise kompensierende Zugkraft wirken, so dass der Werker nur geringe Kräfte für die Bewegung der Vorrichtung an die gewünschte Position aufbringen muss. Soll die Vorrichtung für die Herstellung komplexer und an mehreren unterschiedlichen Positionen eines Halbzeugs auszubildenden Elementen oder bei unterschiedlichen Halbzeugen eingesetzt werden, dürfte der Einsatz eines mehrachsigen Roboters vorteilhaft sein.

Durch die bewegliche Injektionseinheit kann das Ausformen von Elementen auf Halbzeugen auch innerhalb eines kontinuierlichen Produktionsprozesses durchgeführt werden. Vorrichtung und Manipulator bewegen sich dabei in Produktionsrichtung mit der vorgegebenen Produktionsgeschwindigkeit. Somit können Hybridstrukturen in einer kontinuierlichen Prozessstrecke hergestellt werden, ohne dass die Bauteile ausgeschleust werden müssen.

Der Gegenhalter oder der Teil des Gegenhalters bzw. des zweiten Formwerkzeugs des Gegenhalters, der/die mit der Oberfläche des Halbzeugs in Kontakt gebracht werden kann, kann um eine oder zwei Achsen, die senkrecht zur Kraftwirkungsrichtung der Anordnung ausgerichtet sind, drehbar gelagert sein. Dadurch kann ein Ausgleich erreicht werden, wenn an der dem Gegenhalter zugewandten Oberfläche des Halbzeugs Unebenheiten oder eine schräg geneigte Fläche vorhanden ist. Durch die Drehbarkeit und ggf. auch eine Verschwenkbarkeit des Gegenhalters oder eines Teils eines Gegenhalters, kann gesichert werden, dass ein Anliegen an der jeweiligen Oberfläche des Halbzeugs auch bei schrägen Oberflächen erreicht werden kann. Der Gegenhalter oder ein Teils des Gegenhalters kann zum Verschwenken und möglichst auch zum Drehen auch gelenkig mit dem zweiten Schenkel oder einem Schenkel des Positionierbügels verbunden sein. Dadurch kann auch verhindert werden, dass Oberflächen des Halbzeugs beschädigt werden, was insbesondere beim Anlegen des Gegenhalters oder eines Teils des Gegenhalters an der jeweiligen Oberfläche des Halbzeugs auftreten könnte.

Ein drehbarer Gegenhalter oder ein drehbarer Teil eines Gegenhalters kann auch in Verbindung mit einem zweiten Formwerkzeug eingesetzt werden, wenn zumindest das zweite Formwerkzeug für die Herstellung eines rotationssymmetrischen Teils eines Elements ausgebildet ist.

Formwerkzeuge, die bei einer erfindungsgemäßen Vorrichtung einsetzbar sind, können auch mehrere einzelne und auch voneinander getrennte Formen aufweisen, die wiederum bevorzugt über jeweils mindestens einen Kanal gesondert mit plastifiziertem Elementwerkstoff befüllt werden können. Die einzelnen Formen können unterschiedlich geometrisch gestaltet und/oder dimensioniert sein, so dass damit entsprechend unterschiedliche Elemente ausgebildet werden können. Die Zufuhr von plastifiziertem Elementwerkstoff kann gesteuert werden, so dass nur eine oder mehrere bestimmte Formen eines Formwerkzeugs mit plastifiziertem Elementwerkstoff befüllt und dadurch bestimmte Elemente ausgebildet werden. Dazu kann man beispielsweise in einem Kanal, über den plastifizierter Werkstoff in eine bestimmte Form eines Formwerkzeugs gefördert wird, ein steuerbares Ventil anordnen. Diese Formen sind natürlich ebenfalls in Richtung der jeweiligen Oberfläche eines Halbzeugs offen.

Mit der Erfindung kann ein modulares Baukastensystem für viele Anwendungen zur Verfügung gestellt werden.

An der Vorrichtung kann eine einheitliche bzw. normierte Schnittstelle für den Angriff auch unterschiedlicher Manipulatoren, mit denen eine gewünschte Bewegung zur lokal definierten Positionierung und/oder Ausrichtung der Vorrichtung in Bezug zu einem Halbzeug vorhanden sein.

Die erfindungsgemäße Vorrichtung lässt sich in bestehende Prozessketten, bei denen mehrere unterschiedliche Prozessschritte durchgeführt werden, integrieren.

Es können die Produktivität erhöht und die Kosten reduziert werden.

Es können unterschiedliche Werkstoffe für die Herstellung von Elementen eingesetzt werden, die bekanntermaßen zum Spritzgießen geeignet sind. Es können auch Harze in Vertiefungen oder Durchbrechungen injiziert werden.

Lediglich die erreichbare Länge der beiden Schenkel des C-förmigen Bügelelements stellt einen gewissen begrenzenden Einsatzeinfluss dar.

Nachfolgend soll die Erfindung beispielhaft näher erläutert werden.

### Dabei zeigen:

Figur 1 ein Beispiel einer erfindungsgemäßen Vorrichtung in einer schematischen Schnittdarstellung;
Figur 2 ein kinematisches Modell einer vorteilhaften Ausführung einer erfindungsgemäßen Vorrichtung und
Figur 3 ein Ausführungsbeispiel einer erfindungsgemäßen Vorrichtung mit einem Mehrachsroboter als Manipulator

In Figur 1 ist ein Beispiel einer erfindungsgemäßen Vorrichtung gezeigt, bei der ein C-förmiges Bügelelement 1 überwiegend aus kohlenstofffaserverstärktem Kunststoff (CFK) gebildet ist, so dass die Gesamteigenmasse der Vorrichtung maximal 120 kg, bevorzugt aber kleiner 100 Kg und besonders bevorzugt maximal 50 kg beträgt.

Am ersten Schenkel 1.1 des C-förmigen Bügelelements 1 ist eine Anordnung 1.4 befestigt. Die Anordnung ist mit einem Plastifizierzylinder 1.4.3 mit Heizung, in dem eine Schnecke 1.4.2 drehbar gelagert ist, gebildet. Außerdem ist eine Zuführung 1.4.5 für in Granulatform vorliegenden Elementwerkstoff, der ein reiner Kunststoff aber auch ein gefüllter Kunststoff, ein Kunststoff-Metall- oder Keramikpartikelgemisch sein kann, mit der Anordnung 1.4 verbunden. Eine Dosierung des dem ersten Formwerkzeug 1.4.1 und bei diesem Beispiel auch dem zweiten Formwerkzeug 1.3.1 zugeführten plastifizierten Elementwerkstoffs kann über die Anzahl der Umdrehungen der Schnecke bzw. ihrer Drehzahl erreicht werden.

Zur Ausbildung eines Elements an einem Halbzeug 2 kann die Vorrichtung mit einem zusätzlichen Manipulator 3, wie im allgemeinen Teil der Beschreibung erläutert, am Halbzeug 2 positioniert werden.

In Figur 1 ist gezeigt, wie die Vorrichtung lokal definiert am Halbzeug 2 positioniert worden ist. Außerdem wurde der Gegenhalter 1.3, der am zweiten Schenkel (1.2) des C-förmigen Bügelelements 1 angeordnet ist, mit dem hydraulischen Antrieb 4 gegen die hier untere Oberfläche des Halbzeugs bewegt. Die Bewegung erfolgte dabei soweit, dass sich das zweite Formwerkzeug 1.3.1 mit seiner Dichtfläche an diese Oberfläche des Halbzeugs 2 anlegt und dabei auch die Dichtfläche des ersten Formwerkzeugs 1.4.1 an der gegenüberliegenden Oberfläche des Halbzeugs 2 anliegt. Dabei wirken dort Druckkräfte, die sichern, dass beim Spritzgießen kein Elementwerkstoffaus den beiden Formwerkzeugen 1.3.1 und 1.4.1 entweichen kann, bis der Elementwerkstoff soweit abgekühlt ist, dass ein Entformen durch eine Bewegung des Gegenhalters 1.3 in die entgegengesetzte Richtung möglich ist.

Die Vorrichtung wurde dazu mit dem nicht gezeigten Antrieb so positioniert, dass erstes und zweites Formwerkzeug 1.3.1 und 1.4.1 genau so positioniert worden sind, dass ein Element auch innerhalb einer Bohrung, die im Halbzeug 2 ausgebildet war, hergestellt werden kann. So kann man beispielsweise Buchsen, Clips oder Verschlussstopfen als Elemente herstellen.

Bei dem hier gezeigten Beispiel sind erstes und zweites Formwerkzeug 1.3.1 und 1.4.1 jeweils gleich ausgebildet, dies ist jedoch nicht zwingend erforderlich.

Eine Ausführung der erfindungsgemäßen Vorrichtung entsprechend Figur 1, bei der eine Anordnung 1.4 und ein hydraulischer Antrieb 4 starr mit einem Bügelelement 1 verbunden sind, besitzt den Nachteil, dass eine Aufweitung des Bügelelementes 1 durch eine durch den hydraulischen Antrieb 4 aufgebrachte Kraft erfolgt, welche zu einer unerwünschten Verschiebung der Formwerkzeuge 1.4.1 und 1.3.1 zueinanderführt. Eine Verringerung dieser Verschiebung kann durch eine biegesteife aber massereiche Ausführung des Bügelelementes 1 erreicht werden.

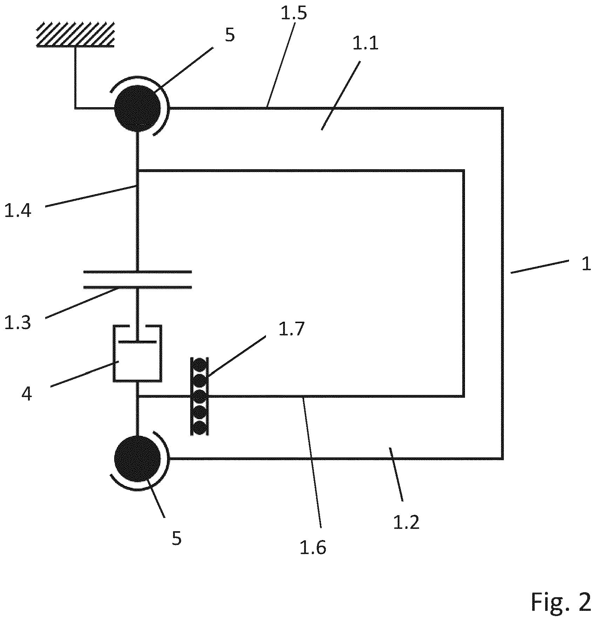

Alternativ zeigt das in Figur 2 dargestellte kinematische Modell eine vorteilhafte Ausführung einer erfindungsgemäßen Vorrichtung, bei der eine Funktionstrennung der wesentlichen Funktionen des C-förmigen Bügelelements 1 - "Kraftübertragung" und "Positionierung der Formwerkzeuge" - erfolgt. Dabei werden ein Formwerkzeug 1.4.1 und der Gegenhalter 1.3 oder die zwei Formwerkzeuge 1.4.1 und 1.3.1 mittels eines Schenkels des Positionierbügels 1.6 derart zueinander geführt, dass nur ein Freiheitsgrad in Richtung der Kraftwirkungslinie des hydraulischen Antriebes 4, der durch eine Linearführung 1.7 freigegeben wird, verbleibt. Die Druckkraft wird mittels eines Haltebügels 1.5 aufgebracht, um ein Formwerkzeug 1.4.1 und den Gegenhalter 1.3 oder zwei Formwerkzeuge 1.4.1 und 1.3.1 gegen die jeweilige Oberfläche des Halbzeugs 2 druckkraftbeaufschlagt zu pressen, während die Bearbeitung durchgeführt wird. Mittels der Gelenke 5 ist der Haltebügel 1.5 drehbar mit einem Manipulator (nicht gezeigt) oder der zum Spritzgießen ausgebildeten Anordnung 1.4 und mit dem Gegenhalter 1.3 verbunden.

Das Aufbiegen, das während des Wirkens der Druckkräfte im Haltebügel 1.5 auftritt, kann mit der an einem Schenkel des Positionierbügels 1.6 vorhandenen Linearführung 1.7 kompensiert werden, sodass im Positionierbügel 1.6 keine Biegebelastung infolge des Wirkens der Druckkräfte auftritt.

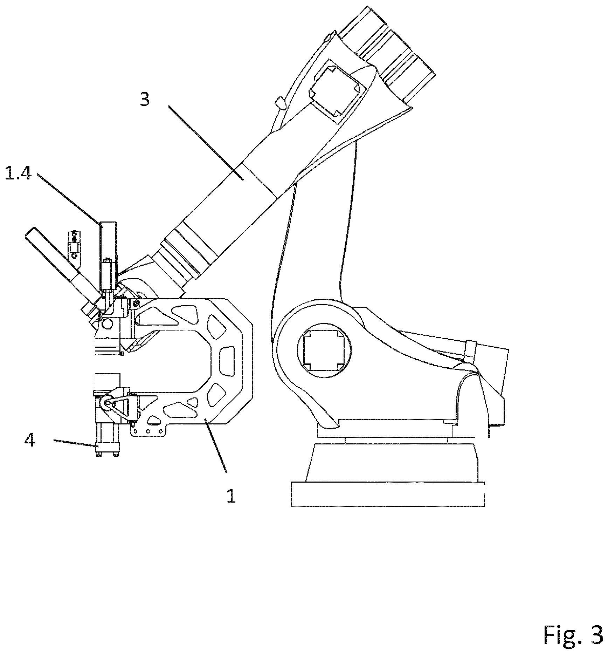

In Figur 3 ist eine Ausführung der Erfindung gezeigt, bei der ein C-förmiges Bügelelement 1 mittels eines Manipulators 3, welcher als Mehrachsroboter ausgeführt ist, bewegt wird. Die Schließkraft wird durch einen als Hydraulikzylinder ausgeführten Antrieb 4 erzeugt. Das Ausbilden von Kunststoffelementen an einem nicht dargestellten Halbzeug 2 erfolgt durch eine als Spritzgießaggregat ausgeführte Anordnung 5, welche an dem C-förmigen Bügelelement 1 angebracht ist.

## Patentansprüche

1. Vorrichtung zur Ausbildung oder dem Anspritzen von Elementen, insbesondere Kunststoffelementen an Oberflächen eines Halbzeugs (2), bei der
ein C-förmiges Bügelelement (1) so ausgebildet ist, dass es mit einem Manipulator (3) entlang mindestens einer Achse in Bezug auf das Halbzeug (2) bewegbar und lokal definiert positionierbar ist, wobei an einem ersten Schenkel (1.1) der beiden sich gegenüberliegend angeordneten Schenkel des C-förmigen Bügelelements (1) eine zum Spritzgießen ausgebildete Anordnung (1.4) und am zweiten Schenkel (1.2) des C-förmigen Bügelelements (1) der zum Spritzgießen ausgebildeten Anordnung (1.4) gegenüberliegend ein Gegenhalter (1.3) angeordnet ist und
die Vorrichtung so ausgebildet ist, dass ein Halbzeug (2) zwischen Gegenhalter (1.3) und Anordnung (1.4) angeordnet werden kann, wenn ein Element ausgebildet werden soll, und
in Richtung auf eine Oberfläche des Halbzeugs (2), an der ein Element ausgebildet werden soll, ein in Richtung der jeweiligen Oberfläche des Halbzeugs (2) offenes erstes Formwerkzeug (1.4.1) mit einer Negativkontur des jeweiligen Elements angeordnet ist und
die Anordnung (1.4) und/oder der Gegenhalter (1.3) so gegen die jeweilige Oberfläche des Halbzeugs (2) bewegbar ist/sind, dass die offene Seite des ersten Formwerkzeugs (1.4.1) druckkraftbeaufschlagt die jeweilige Oberfläche des Halbzeugs (2) und der Gegenhalter (1.3) die gegenüberliegende Oberfläche des Halbzeugs (2) druckkraftbeaufschlagt berührt, wenn ein Element mittels Spritzgießen hergestellt wird, wobei Formwerkzeug (1.4.1) und Gegenhalter (1.3) dann gegenüberliegend angeordnet sind,
wobei die Anordnung (1.4) mit einer Plastifiziereinheit (1.4.3) zur dosierten Förderung von plastifiziertem Werkstoff in das/die Formwerkzeug(e) (1.4.1, 1.3.1) ausgebildet ist; und
wobei die Anordnung (1.4.3) mit einer Elementwerkstoffzuführung (1.4.5) für in Granulatform vorliegenden Elementwerkstoff ausgebildet ist, die an der Plastifiziereinheit (1.4.3) angeschlossen ist.

2. Vorrichtung nach Anspruch 1, **dadurch gekennzeichnet, dass** am Gegenhalter (1.3) ein in Richtung der Oberfläche des Halbzeugs (2) offenes zweites Formwerkzeug (1.3.1) vorhanden ist.

3. Vorrichtung nach einem der vorhergehenden Ansprüche, **dadurch gekennzeichnet, dass** unterschiedlich ausgebildete Formwerkzeuge (1.4.1, 1.3.1) austauschbar an der Anordnung (1.4) oder dem Gegenhalter (1.3) befestigbar sind.

4. Vorrichtung nach einem der vorhergehenden Ansprüche, **dadurch gekennzeichnet, dass** die Anordnung (1.4) und/oder der Gegenhalter (1.3) mittels eines Antriebs (4) translatorisch in Richtung der jeweiligen Oberfläche des Halbzeugs (2) und in die dazu entgegengesetzte Richtung bewegbar ist.

5. Vorrichtung nach einem der vorhergehenden Ansprüche, **dadurch gekennzeichnet, dass** das C-förmige Bügelelement (1) mit einem Haltebügel (1.5) und einem Positionierbügel (1.6) gebildet ist, wobei der außenliegend oder parallel zum Positionierbügel (1.6) angeordnete Haltebügel (1.5) gelenkig mit einem Manipulator verbunden ist.

6. Vorrichtung nach Anspruch 5, **dadurch gekennzeichnet, dass** an mindestens einem der Schenkel (1.1 oder 1.2) des Positionierbügels (1.6) eine Linearführung (1.7), die zur Positionierung der Formwerkzeuge (1.3.1, 1.41) in Bezug zueinander oder eines Formwerkzeugs (1.3.1 oder 1.4.1) in Bezug zur Position des Gegenhalters (1.3) ausgebildet ist.

7. Vorrichtung nach Anspruch 6, **dadurch gekennzeichnet, dass** die Linearführung (1.7) eine Bewegung des Schenkels (1.2) des Positionierbügels (1.6) senkrecht zu seiner Längsachse ermöglicht.

8. Vorrichtung nach einem der vorhergehenden Ansprüche, **dadurch gekennzeichnet, dass** das C-förmige Bügelelement (1), der Haltebügel (1.5) und/oder der Positionierbügel (1.6) zumindest teilweise mit glas- oder kohlenstofffaserverstärktem Kunststoff gebildet ist.

9. Vorrichtung nach einem der vorhergehenden Ansprüche, **dadurch gekennzeichnet, dass** die Anordnung (1.4) und der Gegenhalter (1.3) gelenkig verschwenkbar mit dem jeweiligen ersten und zweiten Schenkel (1.1, 1.2) oder dem Haltebügel (1.5) mit Gelenken (5) verbunden sind.

10. Vorrichtung nach einem der vorhergehenden Ansprüche, wobei eine einheitliche bzw. normierte Schnittstelle für den Angriff des Manipulators (3) vorgesehen ist.

11. System umfassend:
eine Vorrichtung zur Ausbildung oder dem Anspritzen von Elementen nach einem der Ansprüche 1 bis 10; und
einen Manipulator (3) zur lokal definierten Positionierung und/oder Ausrichtung der Vorrichtung in Bezug zu einem Halbzeug (2).

12. System nach Anspruch 11, wobei der Manipulator (3) ein Linearantrieb oder ein Roboter ist, insbesondere ein mehrachsiger Roboter.

13. System nach Anspruch 11, wobei der Manipulator (3) eine Zugeinrichtung oder Handhabungskinematik ist, so dass die Vorrichtung manuell von einem Werker bewegt werden kann.

14. Verfahren zum Ausbilden von Elementen an Oberflächen eines Halbzeugs (2) unter Verwendung einer Vorrichtung zum Ausbilden oder dem Anspritzen von Elementen, wobei:
die Vorrichtung ein C-förmiges Bügelelement (1) umfasst, an dessen erstem Schenkel (1.1) der beiden sich gegenüberliegend angeordneten Schenkel des C-förmigen Bügelelements (1) eine zum Spritzgießen ausgebildete Anordnung (1.4) und am zweiten Schenkel (1.2) des C-förmigen Bügelelements (1) der zum Spritzgießen ausgebildeten Anordnung (1.4) gegenüberliegend ein Gegenhalter (1.3) angeordnet ist;
die Vorrichtung mittels eines Manipulators (3) entlang mindestens einer Achse in Bezug zu einem Halbzeug (2) bewegt und lokal definiert positioniert wird, so dass das Halbzeug (2) zwischen Gegenhalter (1.3) und der zum Spritzgießen ausgebildeten Anordnung (1.4) angeordnet ist, um ein Element an einer gewünschten Position auf einer Oberfläche des Halbzeugs (2) auszubilden;
wobei die Anordnung (1.4) mit einer Plastifiziereinheit (1.4.3) zur dosierten Förderung von plastifiziertem Werkstoff in das/die Formwerkzeug(e) (1.4.1, 1.3.1) ausgebildet ist; und
wobei die Anordnung (1.4.3) mit einer Elementwerkstoffzuführung (1.4.5) für in Granulatform vorliegenden Elementwerkstoff ausgebildet ist, die an der Plastifiziereinheit (1.4.3) angeschlossen ist.

## Claims

1. A device for forming or molding of elements, particularly plastic elements, on surfaces of a semi-finished product (2), wherein
a C-shaped bracket element (1) is configured such that it is movable and positionable locally defined along at least one axis in relation to the semi-finished product (2) by a manipulator (3), wherein an arrangement (1.4) configured for injection molding is positioned at a first leg (1.1) of the two opposing legs of the C-shaped bracket element (1) and a backing holder (1.4) is positioned at the second leg (1.2) of the C-shaped bracket element (1) opposite the arrangement (1.4) configured for injection molding and
the device is implemented such that a semi-finished product (2) can be disposed between the backing holder (1.3) and the arrangement (1.4) when an element is to be formed, and
in direction toward a surface of the semi-finished product (2), at which an element is to be formed, a first molding tool (1.4.1) open in the direction toward the corresponding surface of the semi-finished product (2) and having a negative contour of the corresponding element is disposed, and
the arrangement (1.4) and/or the backing holder (1.3) is/are displaceable against the corresponding surface of the semi-finished product (2), such that the open side of the first molding tool (1.4.1) contacts the corresponding surface of the semi-finished product (2) under application of pressure force and the backing holder (1.3) contacts the opposite surface of the semi-finished product (2) under application of pressure force, when an element is produced by means of injection molding, wherein molding tool (1.4.1) and backing holder (1.3) are then disposed opposite each other,
wherein the arrangement (1.4) is configured with a plasticization unit (1.4.3) for metered conveying of plasticized element material into the molding tool(s) (1.4.1, 1.3.1); and
wherein the arrangement (1.4.3) is configured with an element material feed (1.4.5) for element material in granular form, which is connected to the plasticization unit (1.4.3).

2. Device according to claim 1, **characterized in that**, at the backing holder (1.3), a second molding tool (1.3.1), open in direction of the surface of the semi-finished product (2), is provided.

3. Device according to any of the preceding claims, **characterized in that** differently implemented molding tools (1.4.1, 1.3.1) are interchangeably attachable to the arrangement (1.4) or to the backing holder (1.3).

4. Device according to any of the preceding claims, **characterized in that** the arrangement (1.4) and/or the backing holder (1.3) is translationally displaceable by means of a drive (4) in direction of the corresponding surface of the semi-finished product (2) and in the direction opposite thereto.

5. Device according to any of the preceding claims, **characterized in that** the C-shaped bracket element (1) is implemented with a retaining clip (1.5) and a positioning clip (1.6), wherein the retaining clip (1.5) disposed outboard of or parallel to the positioning clip (1.6) is hingedly connected to a manipulator.

6. Device according to claim 5, **characterized in that** a linear guide (1.7) is implemented on at least one of the legs (1.1 or 1.2) of the positioning clip (1.6) for positioning the molding tools (1.3.1, 1.4.1) relative to each other, or to a molding tool (1.3.1 or 1.4.1) relative to the position of the backing holder (1.3).

7. Device according to claim 6, **characterized in that** the linear guide (1.7) enables a displacement of the leg (1.2) of the positioning clip (1.6) perpendicular to its longitudinal axis.

8. Device according to any of the preceding claims, **characterized in that** the C-shaped bracket element (1), the retaining clip (1.5), and/or the positioning clip (1.6) is formed at least partially with fiberglass-reinforced or carbon fiber-reinforced plastic.

9. Device according to any of the preceding claims, **characterized in that** the arrangement (1.4) and the backing holder (1.3) are hingedly pivotally joined to the corresponding first and second legs (1.1, 1.2) or to the retaining clip (1.5) by hinges (5).

10. Device according to any of the preceding claims, wherein a uniform or standardized interface is provided for the engagement of the manipulator (3).

11. System comprising:
a device for forming or molding of elements according to any of the claims 1 to 10; and
a manipulator (3) for locally defined positioning and/or alignment of the device in relation to a semi-finished product (2).

12. System according to claim 11, wherein the manipulator (3) is a linear drive or a robot, in particular a multi-axis robot.

13. System according to claim 11, wherein the manipulator (3) is a pulling device or a handling kinematic, so that the device can be manually displaced by an operator.

14. Method for forming elements on surfaces of a semi-finished product (2) using a device for forming or molding of elements, wherein:
the device comprises a C-shaped bracket element (1), having positioned on the first leg (1.1) of the two opposing legs of the C-shaped bracket element (1) an arrangement (1.4) configured for injection molding and having opposingly positioned on the second leg (1.2) of the C-shaped bracket element (1) of the device configured for injection molding a backing holder (1.3);
the device is moved and locally defined positioned along at least one axis in relation to the semi-finished product (2) by means of a manipulator (3) such that the semi-finished product (2) is arranged between the backing holder (1.3) and the arrangement configured for injection molding, to form an element at a desired position on a surface of the semi-finished product (2);
wherein the arrangement (1.4) is implemented with a plasticization unit (1.4.3) for metered conveying of plasticized material into the molding tool(s) (1.4.1, 1.3.1); and
wherein the arrangement (1.4.3) is implemented with an element material feed (1.4.5) for element material in granular form, which is connected to the plasticization unit (1.4.3).

## Revendications

1. Dispositif pour la formation ou le formage par pulvérisation d'éléments, en particulier d'éléments en matière plastique sur des surfaces d'un produit semi-fini (2), dans lequel
un élément d'étrier en forme de C (1) est conçu de telle sorte qu'il peut être déplacé à l'aide d'un manipulateur (3) le long d'au moins un axe par rapport au produit semi-fini (2) et peut être positionné de manière définie localement, un arrangement (1.4) configuré pour le moulage par injection étant disposé au niveau d'une première branche (1.1) des deux branches disposées l'une en face de l'autre de l'élément d'étrier en forme de C (1) et un contre-support (1.3) au niveau de la deuxième branche (1.2) de l'élément d'étrier en forme de C (1), en face de l'arrangement (1.4) configuré pour le moulage par injection et
le dispositif est conçu de telle sorte qu'un produit semi-fini (2) peut être disposé entre le contre-support (1.3) et l'arrangement (1.4) lorsqu'un élément doit être formé, et
un premier outil de formage (1.4.1) pourvu d'un contour négatif de l'élément respectif et ouvert en direction de la surface respective du produit semi-fini (2), sur laquelle un élément doit être formé, est disposé en direction d'une surface du produit semi-fini (2) et
l'arrangement (1.4) et/ou le contre-support (1.3) étant déplaçable(s) contre la surface respective du produit semi-fini (2) de telle sorte que le côté ouvert du premier outil de formage (1.4.1) est en contact avec la surface respective du produit semi-fini (2) sous l'effet d'une force de pressage et le contre-support (1.3) est en contact avec la surface opposée du produit semi-fini (2) sous l'effet d'une force de pressage lorsqu'un élément est fabriqué par moulage par injection, l'outil de formage (1.4.1) et le contre-support (1.3) étant alors disposés l'un en face de l'autre,
l'arrangement (1.4) étant réalisé avec une unité de plastification (1.4.3) pour le transport dosé d'un matériau plastifié dans le ou les outils de formage (1.4.1, 1.3.1); et
l'arrangement (1.4.3) étant réalisé avec une alimentation en matériau d'élément (1.4.5) pour un matériau d'élément se présentant sous forme de granulés, qui est raccordée à l'unité de plastification (1.4.3).

2. Dispositif selon la revendication 1, **caractérisé en ce qu'**un deuxième outil de formage (1.3.1) ouvert en direction de la surface du produit semi-fini (2) est présent au niveau du contre-support (1.3).

3. Dispositif selon l'une des revendications précédentes, **caractérisé en ce que** des outils de formage (1.4.1, 1.3.1) de configurations différentes peuvent être fixés de manière interchangeable à l'arrangement (1.4) ou le contre-support (1.3).

4. Dispositif selon l'une des revendications précédentes, **caractérisé en ce que** l'arrangement (1.4) et/ou le contre-support (1.3) peuvent/peut être déplacé(s) en translation au moyen d'un entraînement (4) en direction de la surface respective du produit semi-fini (2) et dans la direction opposée à celle-ci.

5. Dispositif selon l'une des revendications précédentes, **caractérisé en ce que** l'élément d'étrier en forme de C (1) est formé avec un étrier de retenue (1.5) et un étrier de positionnement (1.6), l'étrier de retenue (1.5) disposé à l'extérieur ou parallèlement à l'étrier de positionnement (1.6) étant relié de manière articulée à un manipulateur.

6. Dispositif selon la revendication 5, **caractérisé en ce qu'**un guidage linéaire (1.7) est formé sur au moins l'une des branches (1.1 ou 1.2) de l'étrier de positionnement (1.6), lequel est configuré pour positionner les outils de formage (1.3.1, 1.4.1) les uns par rapport aux autres ou un outil de formage (1.3.1 ou 1.4.1) par rapport à la position du contre-support (1.3).

7. Dispositif selon la revendication 6, **caractérisé en ce que** le guide linéaire (1.7) permet un déplacement de la branche (1.2) de l'étrier de positionnement (1.6) perpendiculairement à son axe longitudinal.

8. Dispositif selon l'une des revendications précédentes, **caractérisé en ce que** l'élément d'étrier en forme de C (1), l'étrier de retenue (1.5) et/ou l'étrier de positionnement (1.6) est/sont formé(s) au moins partiellement avec une matière plastique renforcée par des fibres de verre ou de carbone.

9. Dispositif selon l'une des revendications précédentes, **caractérisé en ce que** l'arrangement (1.4) et le contre-support (1.3) sont reliés de manière articulée et pivotante à la première et à la deuxième branche (1.1, 1.2) respective ou à l'étrier de retenue (1.5) par des articulations (5).

10. Dispositif selon l'une des revendications précédentes, une interface unique ou normalisée étant prévue pour l'attaque du manipulateur (3).

11. Système, comprenant:
un dispositif pour la formation ou d'injection le formage par pulvérisation d'éléments selon l'une des revendications 1 à 10; et
un manipulateur (3) pour le positionnement et/ou l'orientation défini(s) localement du dispositif par rapport à un produit semi-fini (2).

12. Système selon la revendication 11, le manipulateur (3) étant un entraînement linéaire ou un robot, en particulier un robot à plusieurs axes.

13. Système selon la revendication 11, le manipulateur (3) étant un dispositif de traction ou une cinématique de manipulation, de sorte que le dispositif peut être déplacé manuellement par un opérateur.

14. Procédé de formation d'éléments sur des surfaces d'un produit semi-fini (2) par utilisation d'un dispositif de formation ou de formage par pulvérisation d'éléments:
le dispositif comprenant un élément d'étrier en forme de C (1), au niveau de la première branche (1.1) duquel des deux branches de l'élément d'étrier en forme de C (1) disposées l'une en face de l'autre est disposé un arrangement (1.4) configuré pour le moulage par injection et au niveau de la deuxième branche (1.2) de l'élément d'étrier en forme de C (1) est disposé un contre-support (1.3) en face de l'arrangement (1.4) configuré pour le formage par injection;
le dispositif étant déplacé au moyen d'un manipulateur (3) le long d'au moins un axe par rapport à un produit semi-fini (2) et étant positionné de manière définie localement, de sorte que le produit semi-fini (2) est disposé entre le contre-support (1.3) et l'arrangement (1.4) configuré pour le moulage par injection, afin de former un élément à une position souhaitée sur une surface du produit semi-fini (2);
l'arrangement (1.4) étant réalisé avec une unité de plastification (1.4.3) pour le transport dosé de matériau plastifié dans le ou les outils de formage (1.4.1, 1.3.1); et
l'arrangement (1.4.3) étant réalisé avec une alimentation en matériau d'élément (1.4.5) pour un matériau d'élément se présentant sous forme de granulés, qui est raccordée à l'unité de plastification (1.4.3).
